# EUROPÄISCHE PATENTANMELDUNG

(11) **EP 0 887 553 A1**
(43) Veröffentlichungstag der Anmeldung: **30.12.1998**
(21) Anmeldenummer: 97110259.5
(22) Anmeldetag: 24.06.1997
(51) Int. Cl.: F04D 15/02, F04D 13/08, F04B 49/025, G01F 23/60, G01F 23/70, G05D 9/12

(54) **Tauchpumpe**

(71) Anmelder: Hanning & Kahl GmbH & Co., 33813 Oerlinghausen (DE)
(72) Erfinder: Wilmsmeyer, Wolfgang, 33813 Oerlinghausen (DE)
(74) Vertreter: TER MEER STEINMEISTER & PARTNER GbR

(57) **Zusammenfassung**

Tauchpumpe mit einer Sensorelektrode (30) zur Erfassung des Flüssigkeitspegels der abzupumpenden Flüssigkeit, **gekennzeichnet** durch eine Strahldüse (36), die mit der Druckseite der Pumpe verbunden und auf die Sensorelektrode (30) gerichtet ist.

## Beschreibung

Die Erfindung betrifft eine Tauchpumpe mit einer Sensorelektrode zur Erfassung des Flüssigkeitspegels der abzupumpenden Flüssigkeit.

Aus DE 295 08 802 U ist eine Tauchpumpe bekannt, bei der außen am Gehäuse in unterschiedlichen Höhen zwei Elektroden angeordnet sind. Die obere Elektrode dient als Einschaltelektrode. Wenn der Pegel der abzupumpenden, zumeist wässrigen und damit elektrisch leitenden Flüssigkeit das Niveau dieser Einschaltelektrode erreicht, so wird durch die Flüssigkeit ein elektrischer Stromkreis geschlossen, und hierdurch wird das Einschalten der Pumpe ausgelöst. Wenn dann der Flüssigkeitspegel unter das Niveau der unteren Ausschaltelektrode abgesunken ist, wird der Stromfluß über diese Ausschaltelektrode unterbrochen, und hierdurch wird das automatische Abschalten der Pumpe ausgelöst.

Andererseits ist aus DE 30 24 123 C2 ein Überwachungsgerät für eine Ansaugpumpe bekannt, bei dem zwei Elektroden auf annähernd gleicher Höhe im Ansaugrohr der Pumpe angeordnet sind. Auch hier wird die Pumpe automatisch eingeschaltet, sobald der Flüssigkeitspegel das Niveau der Elektroden erreicht. Da Jedoch das Ansaugrohr bei laufender Pumpe stets mit Flüssigkeit gefüllt ist, bleibt die Pumpe selbsthaltend eingeschaltet, solange noch Flüssigkeit angesaugt wird. Erst wenn der Flüssigkeitspegel unter das Niveau des Ansaugstutzens abgesunken ist und die Pumpe somit Luft ansaugt, wird der Stromkreis unterbrochen und die Pumpe abgeschaltet. Die Elektroden sind bei diesem Gerät derart geschützt in dem Ansaugrohr angeordnet, daß sie beim Abschalten der Pumpe nicht von der aus dem Ansaugrohr zurückfallenden Flüssigkeit getroffen werden, so daß ein unerwünschtes Wiederanlaufen der Pumpe verhindert wird.

Bei beiden bekannten Lösungen ist eine relativ aufwendige Elektrodenanordnung erforderlich. Außerdem besteht der Nachteil, daß sich auf den Oberflächen der Elektroden leicht Ablagerungen bilden können, die den elektrischen Kontakt und damit die Funktionsfähigkeit des Gerätes beeinträchtigen.

Aufgabe der Erfindung ist es, eine Tauchpumpe mit Ein- und Ausschaltautomatik zu schaffen, die sich durch einen einfachen Aufbau und eine hohe Funktionssicherhelt auszeichnet.

Diese Aufgabe wird bei einer Tauchpumpe der eingangs genannten Art durch eine Strahldüse gelöst, die mit der Druckseite der Pumpe verbunden und auf die Sensorelektrode gerichtet ist.

Wenn der Flüssigkeitspegel die Sensorelektrode erreicht, wird ein elektrischer Kontakt geschlossen, und die Pumpe wird eingeschaltet. Bei laufender Pumpe wird durch den aus der Strahldüse austretenden Flüssigkeitsstrahl der elektrische Kontakt geschlossen gehalten, so daß die Pumpe selbsthaltend im eingeschalteten Zustand bleibt. Wenn der Flüssigkeitsstrahl unterbrochen wird, beispielsweise wenn die Pumpe Luft ansaugt, so bewirkt dies das automatische Abschalten der Pumpe. Auf diese Weise läßt sich mit nur einer einzigen Elektrode eine automatische Ein- und Ausschaltsteuerung erreichen. Der mit relativ hohem Druck aus der Strahldüse austretende Flüssigkeitsstrahl hat zugleich die Funktion, die Sensorelektrode von Verkrustungen und Ablagerungen freizuhalten, so daß stets ein guter elektrischer Kontakt mit der Flüssigkeit gewährleistet wird und somit eine hohe Funktionssicherheit erreicht wird. Beim Anlaufen der Pumpe erfüllt die Strahldüse zugleich die Funktion einer Entlüftungsöffnung zur Entlüftung des Pumpengehäuses. Durch die im Pumpengehäuse und in der Strahldüse herrschende relativ hohe Strömungsgeschwindigkeit wird auch verhindert, daß sich die Entlüftungsöffnung mit Verunreinigungen zusetzt.

Vorteilhafte Ausgestaltungen der Erfindung sind in den Unteransprüchen angegeben.

Vorzugsweise ist die Sensorelektrode gegen zufließendes Wasser geschützt im Inneren des Pumpengehäuses untergebracht. Beispielsweise kann die Sensorelektrode im Fall einer Kreiselpumpe in einer im Grundriß sichelförmigen Zulaufkammer zwischen der Innenwand des Pumpengehäuses und der Außenwand des Spiralgehäuses angeordnet sein. Die Strahldüse kann dann einfach durch einen Durchbruch in der Wand des Spiralgehäuses gebildet werden.

Erforderlichenfalls kann die Sensorelektrode auch durch ein der Strahldüse zugeordnetes Verschlußglied gegen nachlaufende Flüssigkeit geschützt werden. Dieses Verschlußglied kann beispielsweise eine Rückschlagklappe sein, die in geschlossener Stellung den Druckstutzen und zugleich die Strahldüse verschließt.

In einer besonders bevorzugten Ausführungsform ist zwischen der Strahldüse und der Sensorelektrode ein schwimmerbetätigter Unterbrecher angeordnet, der die Sensorelektrode gegenüber der aus der Strahldüse austretenden Flüssigkeit abschirmt, wenn der Flüssigkeitspegel einen bestimmten Wert unterschritten hat. In diesem Fall wird die Sensorelektrode nicht nur gegen nachlaufende Flüssigkeit geschützt, sondern es Ist auch möglich, durch entsprechende Gestaltung des Schwimmers den Ausschaltzeltpunkt nach Wunsch einzustellen, so daß die Pumpe sich nicht zwangsläufig erst dann ausschaltet, wenn sie In den Schlürfbetrieb übergeht und Luft ansaugt. Gegenüber herkömmlichen Schwimmerschaltern hat diese Lösung den Vorteil, daß der Schwimmer nicht mechanisch auf ein elektrisches Schaltglied einzuwirken braucht, so daß die Störanfälligkeit beträchtlich verringert wird.

Im folgenden werden bevorzugte Ausführungsbeispiele der Erfindung anhand der Zeichnung näher erläutert.

Es zeigen:
- Fig. 1: eine teilweise aufgeschnittene Seitenansicht der Tauchpumpe;
- Fig. 2: die Tauchpumpe nach Figur 1 in abgeschaltetem Zustand;
- Fig. 3: ein Gehäuseunterteil der Tauchpumpe nach Figur 1 in der Draufsicht; und
- Fig. 4: einen schematischen Schnitt durch einen Druckstutzen einer Tauchpumpe gemäß einem anderen Ausführungsbeispiel.

Die Tauchpumpe weist ein im wesentlichen zylindrisches Gehäuse 10 auf, das durch ein Unterteil 12 und ein Oberteil 14 gebildet wird. Der Boden des Gehäuses 10 wird durch einen Saugkorb 16 gebildet, der mit dem unteren Ende des Unterteils 12 verrastet ist.

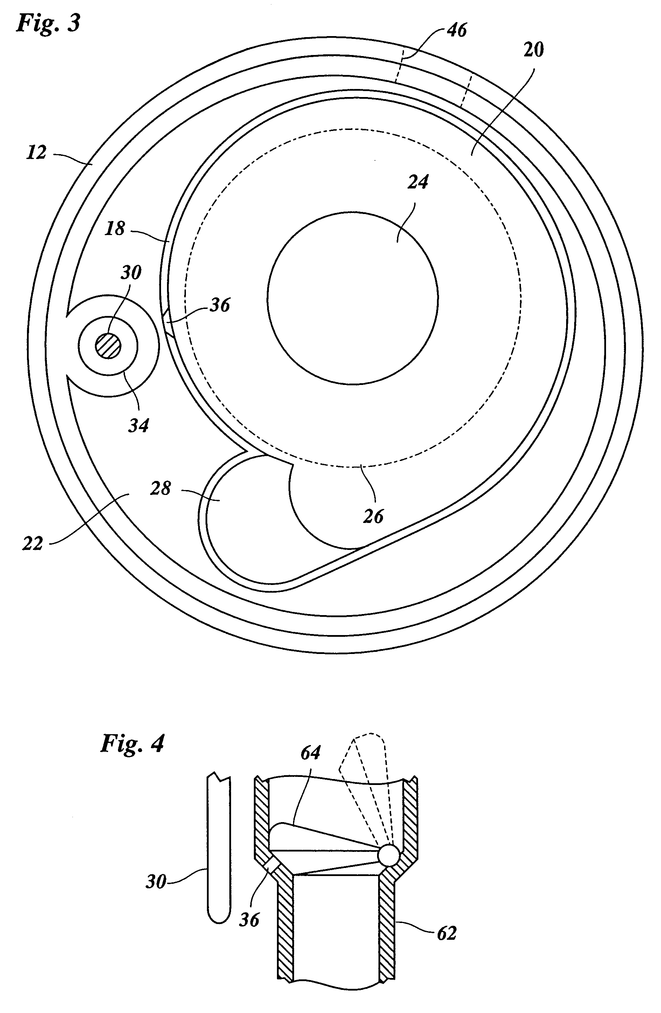

Das Innere des Unterteils 12 wird durch ein Trennwand 18 in ein Spiralgehäuse 20 und eine das Spiralgehäuse auf seinem äußeren Umfang umgebende Zulaufkammer 22 unterteilt. Die Zulaufkammer 22 steht unterhalb des Spiralgehäuses 20 direkt mit dem Saugkorb 16 in Verbindung und ist über eine im Boden des Spiralgehäuses ausgebildete Öffnung 24 (Figur 3) mit dem Spiralgehäuse 20 verbunden. Ein Motor 26 ist konzentrisch zu der Öffnung 24 im Spiralgehäuse 20 angeordnet und trägt am unteren Ende ein in der Zeichnung nicht erkennbares Radialpumpenrad.

Wenn die Tauchpumpe beispielsweise zur Entwässerung eines Raumes oder Beckens eingesetzt wird, so wird sie so aufgestellt, daß der Saugkorb 16 in das Wasser eintaucht. In der Zulaufkammer 22 und Im spiralgehäuse 20 stellt sich dann nach dem Prinzip kommunizierender Röhren derselbe Wasserstand wie in dem umgebenden Becken ein. Durch das Pumpenrad wird das Wasser über die Öffnung 24 angesaugt und durch Fliehkraftwirkung unter Druck in ddas Spiralgehäuse 20 gefördert. Von dort strömt das Wasser tangential in einen seitlich am oberen Ende an das Spiralgehäuse angeschlossenen Druckstutzen 28, der seinerseits mit einem nicht gezeigten Pumpenauslaß verbunden ist.

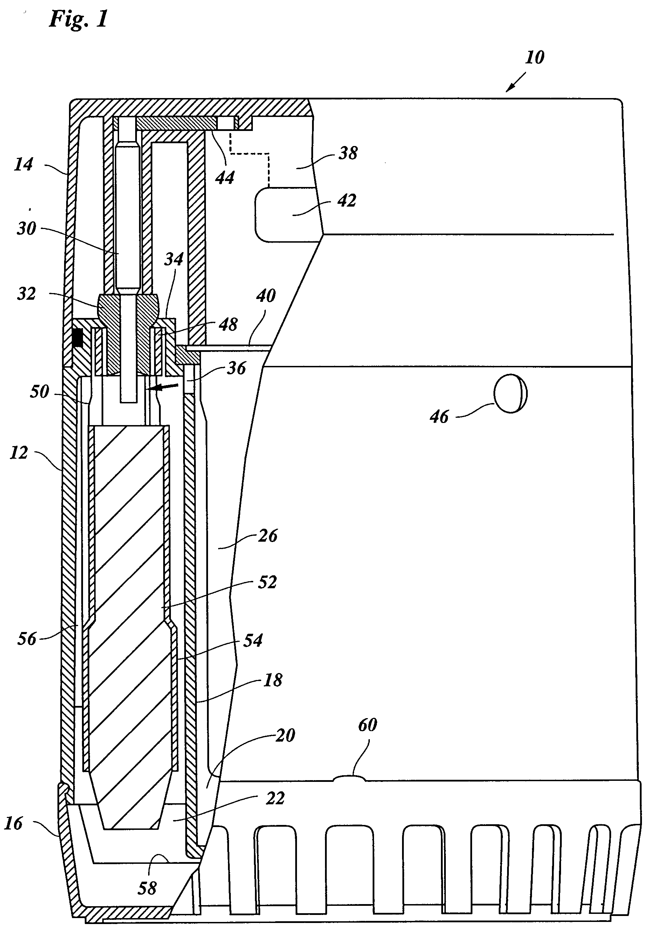

Im oberen Bereich der Zulaufkammer 22 ist in einer in Umfangsrichtung gegenüber dem Druckstutzen 28 versetzten Position eine Sensorelektrode 30 angeordnet. Gemäß Figur 1 wird die Sensorelektrode 30 durch einen vertikal im Oberteil 14 gehaltenen Metallstift gebildet, dessen unteres Ende mit einer Dichtung 32 durch eine an dem Unterteil 12 ausgebildete Schwimmerführung 34 hindurchgeführt ist und In die Zulaufkammer 22 ragt. Unmittelbar benachbart zu der Sensorelektrode 30 wird durch einen Durchbruch in der Trennwand 18 eine Strahldüse 36 gebildet. Bei laufender Pumpe wird durch die Strahldüse 36 ein Teil des Wassers unter hohem Druck aus dem Spiralgehäuse 20 In die Zulaufkammer 22 abgegeben, so daß es in Form eines scharf gebündelten Strahls auf die Sensorelektrode 30 trifft, wie durch einen Pfeil in Figur 1 angedeutet wird.

Im Oberteil des Gehäuses 14 wird eine Kammer 38 gebildet, die durch den Motor 26 und eine Halterung 40 für diesen Motor gegenüber dem Spiralgehäuse 20 abgeschlossen ist. Die Kammer 38 nimmt eine in Figur 1 nur schematisch gezeigte Steuerelektronik 42 der Pumpe auf. Der die Sensorelektrode 30 bildende Stift ist mit seinem oberen Ende in eine im Oberteil 14 gehaltene Kontaktplatte 44 eingeschraubt und steht über diese Kontaktplatte elektrisch mit der Steuerelektronik 42 in Verbindung.

Die Strahldüse 36 wird im gezeigten Beispiel aus entformungstechnischen Gründen durch einen Im oberen Rand der Trennwand 18 ausgesparten Schlitz gebildet, der nach oben durch die Halterung 40 für den Motor abgeschlossen wird. Wie im Grundriß In Figur 3 zu erkennen ist, ist der Querschnitt dieses Schlitzes zur Zulaufkammer 22 hin verjüngt.

In der Außenwand des Unterteils 12 ist eine Entlüftungsöffnung 46 ausgebildet (in Figur 1 nicht lagerichtig eingezeichnet), die in Höhe des oberen Endes der Zulaufkammer 22 angeordnet ist und durch die somit die Zulaufkammer 22 entlüftet wird. Bei nichtlaufender Pumpe wird somit über die Strahldüse 36, die Zulaufkammer 22 und die Entlüftungsöffnung 46 auch das Spiralgehäuse 20 entlüftet.

Wenn der Wasserstand außerhalb der Pumpe und damit auch der Wasserstand in der Zulaufkammer 22 so hoch ist, daß die Sensorelektrode 30 in das Wasser eintaucht, so wird die Sensorelektrode 30 aufgrund der elektrischen Leitfähigkeit des Wassers geerdet, beispielsweise indem ein elektrischer Kontakt zu dem auf Massepotential liegenden Gehäuse des Motors 26 hergestellt wird. Hierdurch erhält die Steuerelektronik 42 ein Signal, durch das das Einschalten der Pumpe ausgelöst wird. Bei laufender Pumpe wird dann durch den von der Strahldüse 36 abgegebenen Wasserstrahl die Masseverbindung der Sensorelektrode 30 auch dann aufrechterhalten, wenn der Wasserstand unter das Niveau der Sensorelektrode 30 absinkt. Auf diese Weise bleibt die Pumpe selbsthaltend in Betrieb. Erst wenn der von der Strahldüse 36 abgegebene Wasserstrahl unterbrochen wird, erkennt die Steuerelektronik 42, daß die Sensorelektrode nicht mehr geerdet ist, und sie setzt daraufhin die Pumpe still.

Ein selbsttätiges Unterbrechen des Druckwasserstrahls findet dann statt, wenn die Pumpe im Schlürfbetrieb ist. Dabei entstehen gegebenenfalls unerwünschte Schlürfgeräusche. Dieser Effekt wird im gezeigten Beispiel dadurch verhindert, daß die Sensorelektrode 30 von einem ringförmigen Unterbrecher 48 umgeben ist, der über einzelne Stützen 50 mit einem vertikal im der Zulaufkammer 22 geführten Schwimmer 52 verbunden ist. Der Schwimmer 52 ist von einer am unteren Ende erweiterten Hülse 54 umgeben, die zwischen vertikalen Rippen 56 geführt ist. Zusätzlich ist der Unterbrecher 48 in der Schwimmerführung 34 geführt.

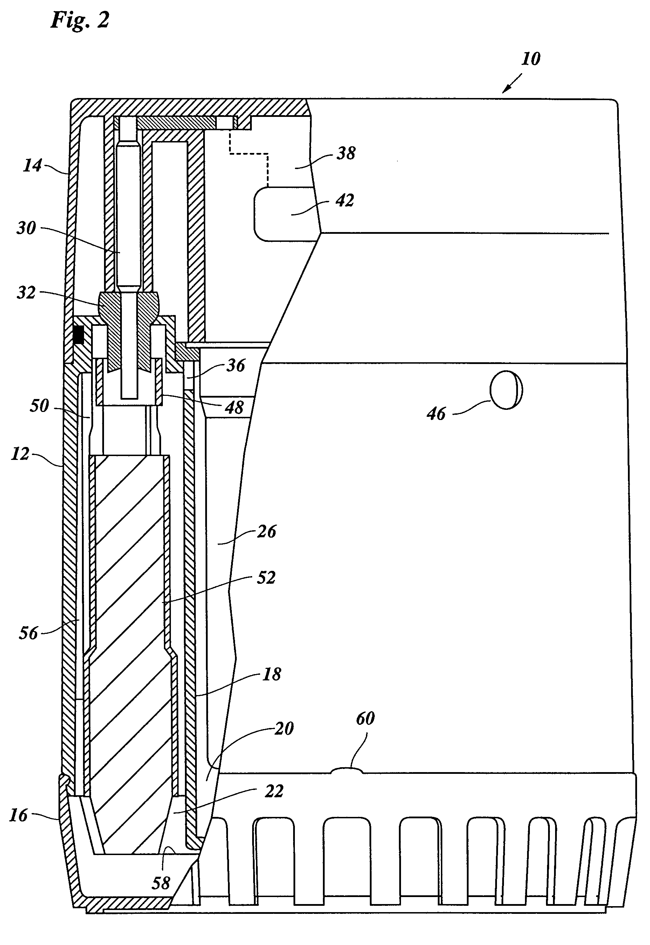

In dem in Figur 1 gezeigten Zustand, der einem hohen Wasserstand entspricht, befindet sich der Schwimmer 52 in seiner oberen Endlage, und der Unterbrecher 48 wird in einer Position oberhalb der Strahldüse 36 gehalten, so daß er den Austritt des Wasserstrahls nicht behindert. Wenn der Wasserstand sinkt, senkt sich der Schwimmer 52 ab, und der Unterbrecher 48 nimmt die in Figur 2 gezeigte Position ein, in der die Sensorelektrode 30 gegenüber der Strahldüse 36 abgeschirmt wird. Auf diese Weise wird der elektrische Kontakt unterbrochen, und die Pumpe wird stillgesetzt. Durch Wahl des Materials und der Form des Schwimmers 52 und/oder geeignete Wahl der Abmessungen des Unterbrechers 48 läßt sich der Flüssigkeitspegel bestimmen, bei dem sich die Pumpe ausschaltet.

In der unteren Endlage gemäß Figur 2 stützt sich der Schwimmer 52 mit seinem unteren Ende auf einer Rippe 58 des Saugkorbes 16 ab. Durch an den Saugkorb angeformte Rastklauen 60 wird sichergestellt, daß der Saugkorb 16 stets lagerichtig montiert wird, so daß die Rippe 58 unter dem Schwimmer 52 sitzt.

Da der Schwimmer 52 lediglich punktuell durch die Rippen 56 und durch die an der Schwimmerführung 34 entlang gleitenden Stützen 50 geführt wird und zudem innerhalb dieser Führung ein gewisses Spiel aufweisen kann, wird eine sehr leichtgängige Bewegung des Schwimmers und damit eine hohe Funktionssicherheit erreicht.

Bei laufender Pumpe läuft das aus der Strahldüse 36 austretende Wasser außen am Schwimmer 52 herab, so daß der Schwimmer und die zu seiner Führung dienenden Rippen 56 ständig gespült und dadurch saubergehalten werden.

Eine weitere mögliche Ausführungsform der Erfindung ist in Figur 4 illustriert. Hier ist in einem Druckstutzen 62 der Pumpe eine Rückschlagklappe 64 angeordnet, die einen Rückstrom der von der Pumpe geförderten Flüssigkeit verhindert. Die Strahldüse 36 ist so in der Wand des Druckstutzens 62 angeordnet daß sie bei geschlossener Rückschlagklappe 64 durch diese verschlossen wird. Bei laufender Pumpe und geöffneter Rückschlagklappe 64 trifft dagegen der aus der Strahldüse 36 austretende Flüssigkeitsstrahl auf die seitlich vor der Strahldüse angeordnete Sensorelektrode 30.

## Patentansprüche

1. Tauchpumpe mit einer Sensorelektrode (30) zur Erfassung des Flüssigkeitspegels der abzupumpenden Flüssigkeit, **gekennzeichnet** durch eine Strahldüse (36), die mit der Druckseite der Pumpe verbunden und auf die Sensorelektrode (30) gerichtet ist.

2. Tauchpumpe nach Anspruch 1, dadurch **gekennzeichnet**, daß die Sensorelektrode (30) im Inneren eines Gehäuses (10) der Tauchpumpe in einer beund entlüfteten Zulaufkammer (22) angeordnet ist.

3. Tauchpumpe nach Anspruch 2, dadurch **gekennzeichnet**, daß die Tauchpumpe eine Kreiselpumpe mit einen Spiralgehäuse (20) ist und daß die Strahldüse (36) in einer Wand (18) des Spiralgehäuses (20) ausgebildet ist.

4. Strahlpumpe nach Anspruch 2 oder 3, dadurch **gekennzeichnet**, daß die Sensorelektrode (30) als vertikaler Stift ausgebildet ist, der von oben in die Zulaufkammer (22) hineinragt.

5. Tauchpumpe nach einem der vorstehenden Ansprüche, **gekennzeichnet** durch einen schwimmerbetätigten Unterbrecher (48), der die Sensorelektrode (30) gegenüber der Strahldüse (36) abschirmt, sobald der Flüssigkeitspegel unterhalb eines vorgegebenen Wertes liegt.

6. Tauchpumpe nach den Ansprüchen 2 und 5, dadurch **gekennzeichnet**, daß der Unterbrecher (48) durch Stützen (50) in Abstand oberhalb eines vertikal in der Zulaufkammer (22) geführten Schwimmers (52) gehalten ist.

7. Tauchpumpe nach Anspruch 1 oder 2, dadurch **gekennzeichnet**, daß die Strahldüse (36) durch ein von der geförderten Flüssigkeit betätigtes Verschlußglied (64) verschließbar ist.

8. Tauchpumpe nach Anspruch 7,dadurch **gekennzeichnet**, daß die Strahldüse (36) in der Wand eines Druckstutzens (62) der Pumpe angeordnet ist und daß das Verschlußglied (64) eine in diesem Druckstutzen angeordnete Rückschlagklappe ist.
